# EUROPÄISCHE PATENTSCHRIFT

(11) **EP 2 533 382 B1**
(45) Veröffentlichungstag und Bekanntmachung des Hinweises auf die Patenterteilung: **08.10.2014**
(21) Anmeldenummer: 11450072.1
(22) Anmeldetag: 08.06.2011
(51) Int. Cl.: H02G 3/04, H02G 3/32

(54) **Kabelhalterungselement**
Cable holding element
Elément de fixation de câble

(43) Veröffentlichungstag der Anmeldung: 12.12.2012
(73) Patentinhaber: Novomatic AG, 2352 Gumpoldskirchen (AT)
(72) Erfinder: Winkler, Heinz, 2352 Gumpoldskirchen (AT)
(74) Vertreter: Wildhack & Jellinek

(56) Entgegenhaltungen:
- EP-A2- 0 893 865
- DE-A1- 2 545 398
- DE-U- 1 851 657
- US-A- 2 896 009

## Beschreibung

Die Erfindung betrifft ein Kabelhalterungselement gemäß dem Oberbegriff des unabhängigen Patentanspruchs 1.

Erfindungsgemäße Kabelhalterungselemente werden zur Aufnahme von Kabeln sowie zur Ausbildung eines Kabelkanals verwendet. Insbesondere können erfindungsgemäße Kabelhalterungselemente im Inneren von elektrischen Geräten, vorzugsweise Spielautomaten, verwendet werden.

Aus dem Stand der Technik sind Kabelführungen für Spielgeräte bekannt, bei denen Kabelstränge durch Kabelbinder und/oder Kabelspiralen zusammengehalten werden. Die Kabelstränge werden über Haltelaschen oder Halteschellen mit dem Gehäuse des jeweiligen Geräts verbunden.

Hierbei tritt der wesentliche Nachteil auf, dass ein nachträgliches Lösen und erneutes Verbinden der Kabelstränge im Gehäuse nur schwer beziehungsweise nur mit viel Aufwand möglich ist. Es besteht somit die Aufgabe, ein Kabelhalterungselement zu schaffen, in das Kabelstränge einfach eingebracht und aus dem Kabefstränge einfach wieder entfernt werden können.

Aus der Europäischen Patentanmeldung EP 0 893 865 A2 ist eine flexible Kabelhalterung zum Halten elektrischer Kabel oder ähnlicher Gegenstände bekannt, die einen Basisteil mit einer Anzahl von Halterungselementen aufweist, die sich entlang ihrer Längskanten erstrecken, sodass sie Teile der Wand eines Kabelkanals formen, in der die einzelnen Halterungselemente fest mit einer Kante des Basiselements verbunden sind. Die Halteelemente haben ein freies Ende, wobei die einzelnen freien Enden der Kabelhalterungen, die von unterschiedlichen Kanten ausgehen, einander gegenüberliegen, wobei die einzelnen Enden der Halterungen in einer gemeinsamen Ebene liegen.

Aus der US-Patentschrift 2,896,009 ist ein Kabelkanal mit einer Grundwand und Seitenwänden sowie Haltefingerelementen bekannt, die von den Seitenwänden abstehen. Diese Haltefinger sind zueinander jeweils mit demselben Abstand beabstandet.

Weiters liegt der Nachteil bzw. ein Problem des Standes der Technik, insbesondere bei Glückspielgeräten, darin, dass bei immer gleichartigen fixen Kabelbaumanordnungen in einem Gerätegehäuse einzelne Kabel immer an derselben Stelle zu liegen kommen. Durch genaue Kenntnis der Kabelposition ist in solchen Geräten oftmals eine Manipulation von außerhalb des Gehäuses möglich. Dies kann etwa mittels Aufbohrens des Gehäuses an einer geeigneten Position erfolgen. Kennt die das Gerät manipulierende Person die jeweilige Position, an der ein Kabel oder ein Kabelstrang verläuft, so besteht die Gefahr, dass diese Person bei einer Vielzahl weiterer Geräte dieselbe Manipulation durchführen kann.

Es besteht somit eine weitere zusätzliche Aufgabe der Erfindung, die Manipulierbarkeit des Geräts zu verringern.

Die Erfindung löst diese Aufgabe mit einem Kabelhalterungselement der eingangs genannten Art mit den Merkmalen des Kennzeichens des unabhängigen Patentanspruchs 1.

Erfindungsgemäß ist bei einem Kabelhalterungselement zur Aufnahme eines oder mehrerer Kabel umfassend einen Grundkörper sowie eine Anzahl von vom Grundkörper abstehenden Rastvorsprüngen, die von voneinander gegenüberliegenden Bereichen des Grundkörpers abstehen, wobei die Rastvorsprünge, und gegebenenfalls der Grundkörper, einen Kanalbereich zur Führung der Kabel umschließen, abgrenzen und/oder festlegen, vorgesehen, dass die Rastvorsprünge, vorzugsweise berührungslos und/oder kammartig ineinander greifen, sodass das Ende zumindest eines der Rastvorsprünge, die von einem Bereich abstehen, zwischen zwei vom jeweils gegenüberliegenden Bereich abstehenden Rastvorsprüngen angeordnet ist und/oder ragt.

Durch ein derartiges Kabelhalterungselement ist ein einfaches Verlegen von Kabelsträngen, ein einfaches Entnehmen der Kabelstränge aus dem Kabelhalterungselement sowie eine rasche bzw. mit vergleichsweise wenig Aufwand verbundene Änderung der Lage der einzelnen Kabelstränge durch Entnahme des Kabelstrangs aus einem Kabelhalterungselement sowie durch Einbringen des Kabelstrangs in ein anderes Kabelhalterungselement möglich.

Somit kann rasch bzw. mit vergleichsweise wenig Aufwand eine Konfiguration oder Modifikation des Kabelwegs eines oder mehrerer Kabel erreicht werden, wobei die Kabelstränge Kabelhalterungselementen innerhalb des Gehäuses des Geräts entnommen werden und in andere Kabelhalterungselemente im selben Gehäuse verlegt werden. Somit ist eine sehr einfache Abhilfe gegen Manipulation möglich, da die Kabelhalterungselemente eine Vielzahl an möglichen Konfigurationen erlauben und dadurch Kabelstränge in einer mehr oder weniger zufälligen Position in einem Gerät verlegt werden können. Hierdurch wird eine gezielte Manipulation des Geräts erschwert.

Zudem bietet die Erfindung den Vorteil, dass eine einfache und flexible Montage mehrerer Kabel und Kabelstränge in einem Gerätegehäuse desselben elektronischen Geräts möglich wird. Ein besonderer Vorteil ist durch Austauschen von Kabeln gegeben, etwa im Zuge des Austauschs von verkabelten Komponenten des Geräts, wobei einzelne Kabel sehr leicht aus den Kabelhalteelementen durch die Rastvorsprünge hindurch herauslösbar sind.

Das Kabelhalterungselement bzw. der Kabelkanal benötigt keine separaten Verschluss- oder Verriegelungselemente, etwa Verschlussklipps, wodurch eine sehr einfache Handhabung gegeben ist und die Montagezeiten verkürzt werden.

Ein besonderer Aspekt der Erfindung sieht vor, dass die den Kanalbereich begrenzenden Rastvorsprünge L-förmig ausgeformt sind, die einander gegenüberliegend beabstandet sind, so dass der Kanalbereich einen geschlossenen und/oder U-förmigen Kanalquerschnitt aufweist. Diese vorteilhafte Ausgestaltung der Rastvorsprünge bzw. des Kanalquerschnitts ermöglicht ein einfaches Einbringen und Entnehmen des Kabelstrangs bzw. der Kabel in den Kanalbereich bzw. aus dem Kanalbereich.

Weiters kann vorgesehen sein, dass in Längserstreckung des Kanalbereichs die Rastvorsprünge derart angeordnet sind, dass sie, vorzugsweise berührungslos, kammartig ineinander greifen, sodass das Ende zumindest eines Rastvorsprunges zwischen zwei jeweils gegenüberliegenden Rastvorsprüngen angeordnet ist und/oder ragt. Hierdurch wird das unbeabsichtigte, etwa durch Rütteln hervorgerufene Herausfallen von Kabeln oder Kabelsträngen aus dem Kabelkanal vermieden.

Weiters kann vorgesehen sein, dass die Rastvorsprünge elastisch biegbar und federnd ausgebildet sind, sodass sie gegenüber dem Grundkörper des Kabelhalterungselements verschwenkbar sind und nach dem Verschwenken wieder in ihre Ausgangsposition zurückkehren. Hierdurch wird das Einbringen von Kabeln in den Kabelkanal vereinfacht, wobei ein Kabel durch den Zwischenbereich zwischen den Rastvorsprüngen hindurch gedrückt werden kann.

Eine besonders vorteilhafte Ausgestaltung der Rastvorsprünge, die ein Herausrutschen oder Herausgleiten der Kabelstränge aus dem Kabelkanal verhindert, sieht vor, dass die Rastvorsprünge, insbesondere winkelhakenförmig, gebogen ausgebildet sind und zwei Rastvorsprungabschnitte aufweisen, wobei der erste Rastvorsprungabschnitt einem Winkel von 70°-90°, vorzugsweise 85°-90°, insbesondere genau senkrecht und/oder normal, vom jeweiligen Bereich absteht und wobei der zweite Rastvorsprungsabschnitt den ersten Rastvorsprungsabschnitt an der dem jeweiligen Bereich fernen Ende fortsetzt und mit einem Winkel, insbesondere mit einem Winkel zwischen 70° bis 110°, vorzugsweise 90°, zum ersten Rastvorsprungsabschnitt in Richtung der Rastvorsprünge gerichtet absteht, die vom jeweils gegenüberliegenden Bereich abstehen.

Eine konstruktiv besonders einfache Ausgestaltung der Rastvorsprünge sieht vor, dass die beiden Rastvorsprungsabschnitte einstückig, insbesondere jeweils aus einem flachen Körper und/oder einem Profilstab, ausgebildet sind, der zwischen dem ersten und dem zweiten Rastvorsprungsabschnitt einen Bogen aufweist.

Um das Eindringen der Kabelstränge in den Kabelkanal bzw. das Kabelhalterungselement zu erleichtern, kann vorgesehen sein, dass die beiden Rastvorsprungabschnitte einen Winkel von weniger als oder gleich 90° einschließen.

Um eine besonders einfache Kabelführung zu ermöglichen und eine Ausbildung längerer Kabelhalterungselemente mit einer längeren Erstreckung in Kabelrichtung zu ermöglichen, kann vorgesehen sein, dass die beiden Bereiche, von denen die Rastvorsprünge abstehen, zueinander parallel verlaufen und/oder in einer Ebene liegen.

Um eine gleichmäßige Belastung des Grundkörpers des Kabelkanals beim Einfügen der Kabel oder Kabelstränge bzw. beim Herausnehmen der Kabel oder Kabelstränge zu erzielen und eine einfache konstruktive Ausgestaltung des Kabelkanals zu erreichen, kann vorgesehen sein, dass die jeweilige Anzahl der Rastvorsprünge, die von den beiden Bereichen abstehen, um höchstens eins voneinander abweicht.

Um das Einbringen der Kabelstränge in den Kabelkanal bzw. das Kabelhalterungselement zu erleichtern, kann vorgesehen sein, dass die Enden der Rastvorsprünge oder die Enden der zweiten Rastvorsprungsabschnitte zum Grundkörper hin geneigt sind.

Um ein unbeabsichtigtes Herausrutschen oder Herausgleiten der Kabelstränge oder Kabel, insbesondere durch Vibrationen, zu verhindern, kann vorgesehen sein, dass für jeden Rastvorsprung, dessen Ende zwischen zwei vom jeweils gegenüberliegenden Bereich abstehenden Rastvorsprüngen angeordnet ist, ein vom gegenüberliegenden Bereich abstehender weiterer Rastvorsprung vorgesehen ist, dessen Ende dem Ende des jeweiligen Rastvorsprungs angenähert ist und gegenüberliegt, wobei insbesondere die Stirnseiten der Enden des weiteren Rastvorsprungs und des Rastvorsprungs einander gegenüberliegen.

Um eine konstruktiv einfache Ausgestaltung eines solchen Kabelkanals zu erzielen, kann vorgesehen sein, dass die weiteren Rastvorsprünge jeweils einen ersten Rastvorsprungsabschnitt aufweisen, der vom Grundkörper im Winkel, insbesondere in einem Winkel von 70° bis 110°, vorzugsweise 90°, absteht und einen zweiten Rastvorsprungsabschnitt aufweisen, der den ersten Rastvorsprungsabschnitt fortsetzt und vom ersten Rastvorsprungsabschnitt absteht.

Eine Vereinfachung der konstruktiven Ausbildung sieht vor, dass die Form und/oder Ausrichtung des ersten und/oder zweiten Rastvorsprungsabschnitts der weiteren Rastvorsprünge der Form und Ausrichtung des ersten und/oder zweiten Rastvorsprungabschnitts der Rastvorsprünge entspricht.

Eine weitere zusätzliche oder alternative Vereinfachung der Konstruktion sieht vor, dass die Länge des ersten Rastvorsprungabschnitts der weiteren Rastvorsprünge der Länge des ersten Rastvorsprungabschnitts der Rastvorsprünge entspricht.

Eine weitere Vereinfachung des Aufbaus des erfindungsgemäßen Kabelhalterungselements sieht vor, dass die vom ersten Bereich und/oder die vom zweiten Bereich abstehenden Rastvorsprünge gleich ausgebildet und/oder ausgerichtet sind, und/oder dass alle Rastvorsprünge gleich ausgebildet sind.

Zum selben Zweck kann zusätzlich oder alternativ vorgesehen sein, dass die vom ersten Bereich und/oder die vom zweiten Bereich abstehenden weiteren Rastvorsprünge gleich ausgebildet und/oder ausgerichtet sind, und/oder dass alle weiteren Rastvorsprünge gleich ausgebildet sind.

Zur Ausbildung längerer Kabelhalterungselemente, die eine größere Längserstreckung in Richtung des Kabels aufweisen, kann vorgesehen sein, dass die Rastvorsprünge von zwei Bereichen abstehen, wobei eine Anzahl von ersten Rastvorsprüngen vom ersten der beiden Bereiche absteht und eine Anzahl von zweiten Rastvorsprüngen vom zweiten der beiden Bereiche absteht.

Zur Verhinderung des Herausgleitens oder Herausrutschens von Kabeln oder Kabelsträngen aus dem Kabelkanal kann vorgesehen sein, dass die ersten Rastvorsprünge von Teilbereichen des ersten Bereichs abstehen, die auf einer ersten Geraden liegen und/oder dass die zweiten Rastvorsprünge von Teilbereichen des zweiten Bereichs abstehen, die auf einer zweiten Geraden liegen, wobei die erste Gerade und die zweite Gerade vorzugsweise zueinander parallel angeordnet sind.

Zusätzlich oder alternativ kann zum selben Zweck vorgesehen sein, dass eine Anzahl der weiteren Rastvorsprünge und/oder von Teilbereichen des zweiten Bereichs absteht, die auf der ersten Geraden liegen, und die übrigen der weiteren Rastvorsprünge von Teilbereichen des zweiten Bereichs abstehen, die auf der zweiten Geraden liegen.

Um eine platzsparende Konstruktion zu erhalten, die ein Verschlingen oder Verhaken von Kabeln, die außerhalb des Kabelhalterungselements verlegt sind, zu verhindern, kann vorgesehen sein, dass zwischen je zwei Rastvorsprüngen jeweils ein weiterer Rastvorsprung angeordnet ist.

Dabei kann insbesondere vorgesehen sein, dass die zweiten Rastvorsprungsabschnitte der Rastvorsprünge, gegebenenfalls auch die zweiten Rastvorsprungsabschnitte der weiteren Rastvorsprünge, in derselben Ebene liegen.

Zur Verringerung des Materialbedarfs des Grundkörpers kann vorgesehen sein, dass der Grundkörper in den den Rastvorsprüngen gegenüberliegenden Bereichen zumindest eine Ausnehmung aufweist

Zur Stabilisierung der Rastvorsprünge sowie um ein Abbrechen der Rastvorsprünge beim Ein- und Ausbringen der Kabelstränge oder Kabel zu verhindern, kann vorgesehen sein, dass der Grundkörper zumindest einen, insbesondere zwei, von ihm, insbesondere senkrecht und/oder normal, abstehenden Vorsprung aufweist, von dem die einzelnen Rastvorsprünge und gegebenenfalls die weiteren Rastvorsprünge abstehen.

Zur vereinfachten Führung der Kabel kann vorgesehen sein, dass sich der Kanalquerschnitt des Kanalbereichs zumindest in einem Teilbereich entlang der Längserstreckung des Kanalbereichs verjüngt und/oder erweitert.

Um ein einfaches Ein- und Ausbringen der Kabel in das Kabelhalterungselement bzw. aus dem Kabelhalterungselement zu erreichen, kann vorgesehen sein, dass die Rastvorsprünge elastisch biegsam und/oder federnd ausgebildet sind

Um ein Abbrechen der Rastvorsprünge beim Ein- und/oder Ausbringen der Kabelstränge oder Kabel zu verhindern, kann vorgesehen sein, das Verhältnis der Breite in Längsrichtung des Kabelhalterungselements zur Dicke der Rastvorsprünge im Bereich zwischen 4:1 bis 4:1,5, insbesondere bei 4:1,3 liegt.

Um eine ausreichende elastische Biegsamkeit zu gewährleisten, kann insbesondere vorgesehen sein, dass die Rastvorsprünge, gegebenenfalls die weiteren Rastvorsprünge und/oder das gesamte Kabelhalterungselement, aus Kunststoff, insbesondere Polyethylen PE und/oder Polypropylen PP, hergestellt ist.

Weiters betrifft die Erfindung eine Kabelhalterung umfassend eine Anzahl von erfindungsgemäßen Kabelhalterungselementen.

Um eine für einen Außenstehenden nicht erkennbare Verkabelung bzw. nicht vorhersagbare Verkabelung zu erreichen, kann vorgesehen sein, dass die einzelnen Kabelhalterungselemente gleich ausgerichtet auf einem gemeinsamen Grundkörper angeordnet sind.

Um ein leichtes bzw. einfaches Befestigen der Kabelhalterung an einem Gerät zu erzielen, kann vorgesehen sein, dass der Grundkörper Befestigungsmittel zum, insbesondere werkzeuglosen lösbaren, Befestigen der Kabelhalterung an einem Gerät, insbesondere mit einem Gestell eines Geräts, aufweist,.

Um den Materialverbrauch zu verringern, kann vorgesehen sein, dass der gemeinsame Grundkörper in den den Rastvorsprüngen gegenüberliegenden Bereichen jeweils zumindest eine Ausnehmung aufweist

Zur Befestigung einer Kabelhalterung in Eckbereichen eines Geräts kann vorgesehen sein, dass der gemeinsame Grundkörper ein W-förmiges Winkelprofil ausbildet, wobei die Rastvorsprünge beider Kabelhalterungselemente von der zentralen Bugkante des W-förmigen Winkelprofils abstehen und zudem Rastvorsprünge jeweils eines der Kabelhalterungselemente von den Endkanten des W-förmigen Winkelprofils abstehen.

Hierbei kann ein besonders großer Kabelquerschnitt erzielt werden, wenn von der Bugkante und/oder der Endkante Vorsprünge abstehen, von denen die Rastvorsprünge abstehen.

Eine besonders vorteilhafte Anpassung an den Eckbereich eines rechtwinkeligen Geräts wird erreicht, wenn das W-förmige Winkelprofil im Bereich der zentralen Bugkante, vorzugsweise auch in den beiden Endkanten, einen rechten Winkel aufweist.

Zur Befestigung der Kabelhalterung an eben ausgebildeten Flächen des Geräts kann vorgesehen sein, dass dass der gemeinsame Grundkörper flach und/oder eben ausgebildet ist und die einzelnen Rastvorsprünge nach derselben Seite vom Grundkörper abstehen.

Um eine große Vielzahl unterschiedlicher Verkabelungsmöglichkeiten zu erreichen und damit einer bewussten Manipulation durch Dritte entgegenzuwirken, kann vorgesehen sein, dass die einzelnen Kabelhalterungselemente auf dem Grundkörper gleich ausgerichtet und gegebenenfalls nebeneinander und/oder hintereinander angeordnet sind.

Zum selben Zweck kann zusätzlich oder alternativ vorgesehen sein, dass die ersten und zweiten Geraden zueinander parallel angeordnet sind.

Schließlich betrifft die Erfindung ein elektronisches Gerät, insbesondere einen Wett- oder Glücksspielautomaten oder ein Wett- oder Glücksspielgerät, das zumindest eine erfindungsgemäße Kabelhalterung oder zumindest eine Mehrzahl von erfindungsgemäßen Kabelhalterungselementen umfasst. Ein solches elektronisches Gerät weist eine Vielzahl unterschiedlicher Verkabelungsmöglichkeiten auf, die es dem Hersteller des Geräts ermöglicht, seine Geräte mit unterschiedlichen Kabelpositionierungen auszustatten, um eine immer auf dieselbe Weise erfolgende Manipulation seiner Wett- oder Glücksspielgeräte zu verhindern.

Im folgenden werden vier Ausführungsformen der Erfindung anhand der folgenden Zeichnungen näher dargestellt.

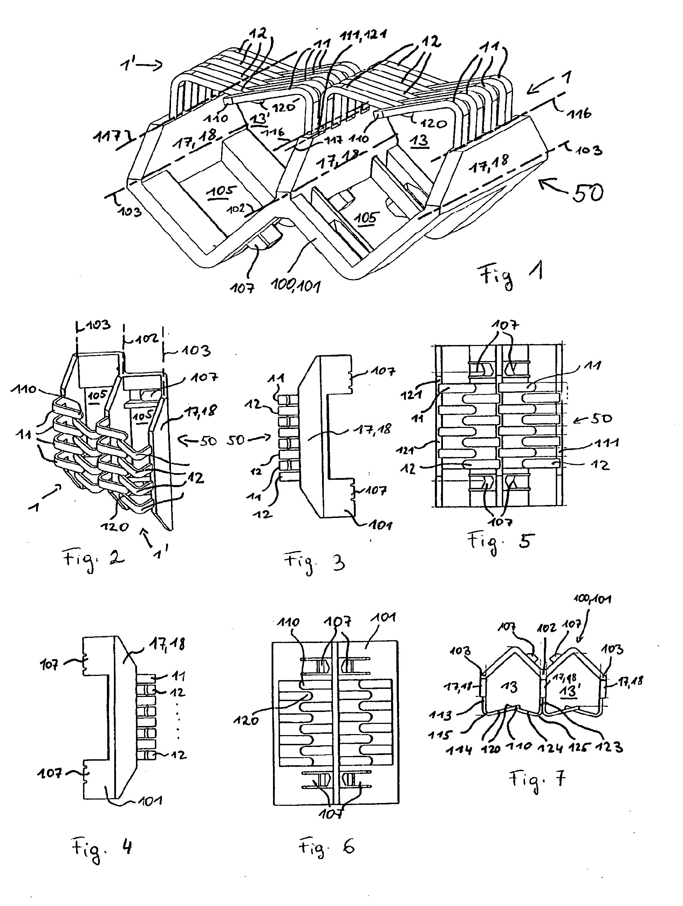

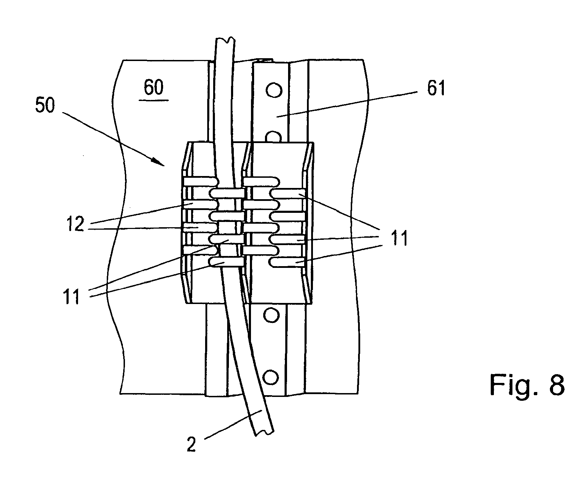

**Fig. 1** zeigt eine Kabelhalterung mit einem W-förmigen Querschnitt in Schrägansicht. **Fig. 2** zeigt die in Fig. 1 dargestellte Kabelhalterung aus einer anderen Perspektive in Schrägansicht. Fig. 3 zeigt die in Fig. 1 dargestellte Kabelhalterung in Seitenansicht. **Fig. 4** zeigt die in Fig. 1 dargestellte Kabelhalterung in Seitenansicht von der anderen Seite. **Fig. 5** zeigt die in Fig. 1 dargestellte Kabelhalterung von oben. **Fig. 6** zeigt die in Fig. 1 dargestellte Kabelhalterung von unten. **Fig. 7** zeigt die in Fig. 1 dargestellte Kabelhalterung mit Blick auf den Kanalbereich. **Fig.** 8 zeigt den Innenbereich eines elektronischen Geräts, in dessen Eckbereich eine Kabelhalterung wie in Fig. 1 dargestellt eingebaut ist.

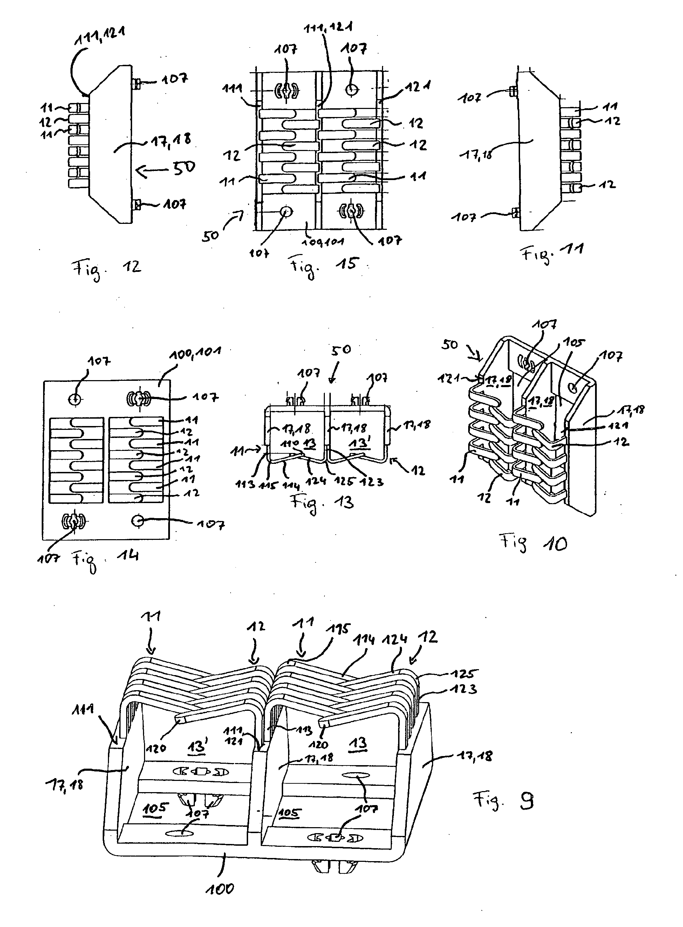

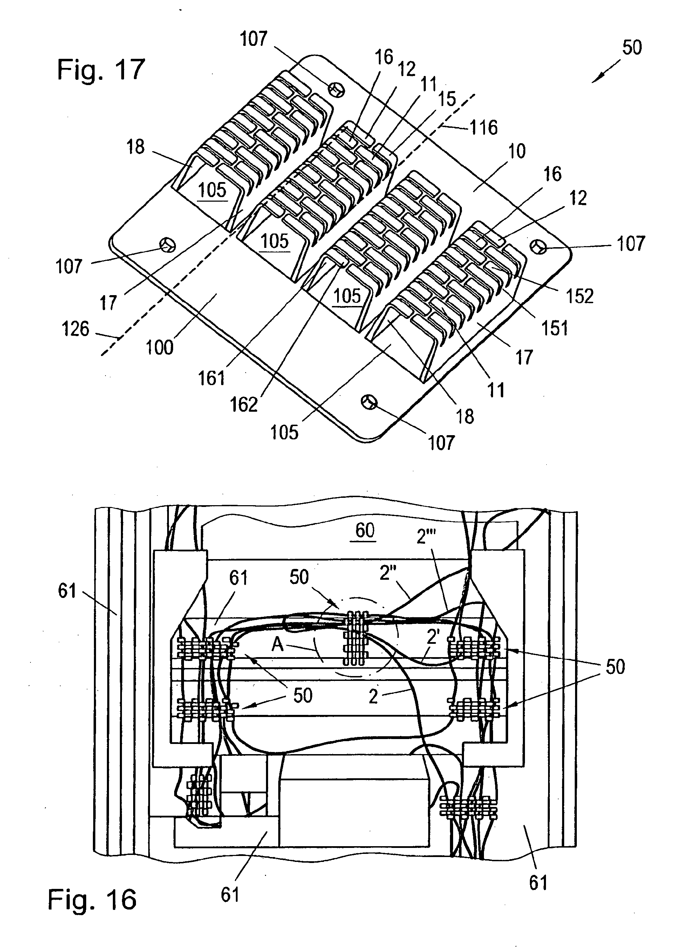

**Fig. 9** zeigt eine zweite Ausführungsform der Erfindung in Schrägansicht. Fig. 10 zeigt die in Fig. 9 dargestellte Ausführungsform der Erfindung aus einer anderen Perspektive in Schrägansicht. **Fig. 11** zeigt die in Fig. 9 dargestellte Ausführungsform der Erfindung von der Seite. **Fig. 12** zeigt die in Fig. 9 dargestellte Ausführungsform der Erfindung von der gegenüberliegenden Seite. **Fig. 13** zeigt die in Fig. 9 dargestellte Ausführungsform der Erfindung mit Sicht auf den Kanalbereich. **Fig. 14** zeigt die in Fig. 9 dargestellte Ausführungsform der Erfindung von oben. **Fig. 15** zeigt die in Fig. 9 dargestellte Ausführungsform der Erfindung von unten. **Fig. 16** zeigt den Innenbereich eines Geräts mit einer Anzahl von darin montierten Kabelhalterungen, wie in Fig. 9 dargestellt.

**Fig. 17** zeigt eine dritte Ausführungsform der Erfindung in Schrägansicht.

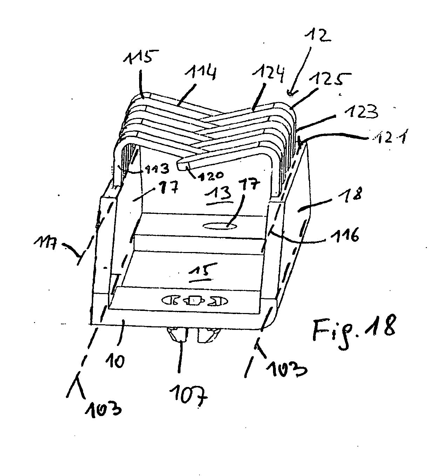

**Fig. 18** zeigt eine vierte Ausführungsform der Erfindung in Schrägansicht.

In **Fig. 1** ist eine **erste Ausführungsform** einer erfindungsgemäßen Kabelhalterung 50 mit zwei Kabelhalterungselementen 1, 1' dargestellt. Die Kabelhalterungselemente 1, 1' weisen einen gemeinsamen Grundkörper 100 auf, wobei zwei voneinander abgetrennte Kanalbereiche 13, 13' ausgebildet sind. Der Grundkörper 100 weist ein W-förmiges Winkelprofil 101 auf, das seinerseits eine zentrale Bugkante 102 sowie zwei Endkanten 103 aufweist. Die zentrale Bugkante 102 liegt parallel zu den Endkanten 103 und liegt mit diesen in derselben Ebene.

Beide Kanalbereiche 13, 13' werden jeweils von einer Hälfte des W-förmigen Profils 101 sowie von Vorsprüngen 17, 18 begrenzt, wobei die Vorsprünge 17, 18 von der Bugkante 102 und den Endkanten 103 abstehen. Ein zentraler Vorsprung 17, 18 steht von der zentralen Bugkante 102 ab, jeweils ein seitlicher Vorsprung 17, 18 steht von jeweils einer der beiden Endkanten 103 ab.

Diese Vorsprünge 17, 18 sind im vorliegenden Ausführungsbeispiel normal zu der durch die zentrale Bugkante 102 sowie die beiden Endkanten 103 festgelegte Ebene stehend ausgebildet und schließen an die zentrale Bugkante 102 oder an die Endkanten 103 an und setzen diese fort. Die Vorsprünge 17, 18 erstrecken sich in Profillängsrichtung des W-förmigen Profils 101 über die gesamte Länge des Profils und stehen normal auf die durch die zentrale Bugkante 102 und die Endkante 103 festgelegte Ebene.

An dem jeweiligen, der Bugkante 102 bzw. der jeweiligen Endkante 103 fernen Ende des jeweiligen Vorsprunges 17, 18 ist eine Fläche mit einem Bereich 111, 121 ausgebildet, von der einzelne Rastvorsprünge 11, 12 abstehen.

In Bezug auf das erste Kabelhalterungselement 1, das den ersten Kanalbereich 13 abgrenzt, werden der auf dem der Endkante 103 fernen Ende des Vorsprunges 17, 18 befindliche Bereich und der auf dem zentralen Vorsprung 17, 18 befindliche Bereich als einander gegenüberliegende Bereiche 111, 121 bezeichnet. Analog werden in Bezug auf das zweite Kabelhalterungselement 1', das den zweiten Kanalbereich 13' abgrenzt, der auf dem der Endkante 103 fernen Ende des Vorsprunges 17, 18 befindliche Bereich und der auf dem zentralen Vorsprung 17, 18 befindliche Bereich als einander gegenüberliegende Bereiche 111, 121 bezeichnet.

Wie in Fig. 7 dargestellt, umfassen die Rastvorsprünge 11, 12 jeweils einen ersten Rastvorsprungsabschnitt 113, 123 sowie einen zweiten Rastvorsprungsabschnitt 114, 124. Die Rastvorsprünge 11, 12 sind L-förmig oder winkelhakenförmig ausgebildet und weisen jeweils zwei Rastvorsprungsabschnitte 113, 114, 123, 124 auf. Jeder Rastvorsprung 11, 12 weist jeweils einen ersten Rastvorsprungsabschnitt 113, 123 und einen zweiten Rastvorsprungsabschnitt 114, 124 auf. Die ersten Rastvorsprungsabschnitte 113, 123 stehen senkrecht und/oder normal zu den Bereichen 111, 121, von denen sie abstehen. Der zweite Rastvorsprungsabschnitt 114, 124 setzt den ersten Rastvorsprungsabschnitt 113, 123 an dessen dem jeweiligen Bereich 111, 121 fernen Ende fort.

Die Rastvorsprungsabschnitte 113, 114, 123, 124 sind einstückig ausgebildet und aus einem flachen Körper ausgebildet. Im vorliegenden Fall werden gebogene Profilstäbe als Rastvorsprünge 11, 12 herangezogen. Diese Profilstäbe bzw. flachen Körper weisen zwischen dem ersten und dem zweiten Rastvorsprungsabschnitt 113, 114, 123, 124 jeweils einen Bogen 115, 125 auf. Dieser Bogen 115, 125 ist derart ausgebildet, dass die beiden Rastvorsprungsabschnitte 113, 114, 123, 124 einen Winkel von weniger als 90°, im vorliegenden Fall etwa 75°, einschließen.

Die zweiten Rastvorsprungsabschnitte 114, 124 stehen vom Ende des ersten Rastvorsprungsabschnittes in Richtung des jeweils gegenüberliegenden Bereiches 111, 121 ab. Die einzelnen Rastvorsprünge 11, 12 sind kammartig angeordnet, das heißt, sie sind beabstandet angeordnet und gleich ausgerichtet, wobei alle vom selben Bereich 111, 121 des ersten Kabelhalterungselements 1, 1' abstehenden Rastvorsprünge 11, 12 zu ihren jeweils benachbart angeordneten Rastvorsprüngen 11, 12 jeweils denselben Abstand haben.

Die Rastvorsprünge 11, 12 stehen von Punkten und/oder Teilbereichen auf den Bereichen 111, 121 ab, die jeweils auf einer gemeinsamen Geraden 116, 117 angeordnet sind. Die einander gegenüberliegenden Rastvorsprünge 11, 12 greifen berührungslos ineinander, wobei die Enden 110, 120 der Rastvorsprünge 11, 12 bzw. die Enden 110, 120 (Fig. 2, 5) der zweiten Rastvorsprungsabschnitte 114, 124 einander berührungslos angenähert sind. Jedes Ende 110, 120 des jeweiligen Rastvorsprungs 11, 12 ist zwischen zwei vom jeweils gegenüberliegenden Bereich 111, 121 abstehenden Rastvorsprünge 11, 12 angeordnet bzw. ragt in den Zwischenbereich zwischen zwei vom gegenüberliegenden Bereich 11, 12 abstehenden Rastvorsprüngen 11, 12 hinein. Die einzelnen Enden 110, 120 der Rastvorsprünge 11, 12 bzw. der zweiten Rastvorsprungsabschnitte 114, 124 sind so angeordnet, dass sie die vom gegenüberliegenden Bereich 111, 121 abstehenden Rastvorsprünge 11, 12 nicht berühren. Im vorliegenden Ausführungsbeispiel sind sämtliche Rastvorsprünge 11, 12 untereinander gleich ausgebildet und ausgerichtet und berühren einander gegenseitig nicht.

Auf dem von der zentralen Bugkante 102 abstehenden Vorsprung 17, 18 sind sowohl Rastvorsprünge 11, 12 ausgebildet, die den ersten Kanalbereich 13 begrenzen, als auch Rastvorsprünge 11, 12, die den anderen Kanalbereich 13' begrenzen. Die der zentralen Bugkante 102 abgewandte Seite des zentralen Vorsprungs 17, 18 bildet somit einen Bereich 111, 121 aus, von dem sowohl Rastvorsprünge 11, 12 zur Begrenzung des ersten Kanalbereiches 13, als auch zur Begrenzung des zweiten Kanalbereiches 13' abstehen.

Die Anordnung der Rastvorsprünge 11, 12 erfolgt derart, dass der Kanalbereich 13, 13' einen geschlossenen und/oder U-förmigen Kanalquerschnitt ausweist.

Im vorliegenden Ausführungsbeispiel umfasst jedes der beiden Kabelhalterungselemente 1, 1' der Kabelhalterung 50 jeweils vier erste Rastvorsprünge 11 und vier zweite Rastvorsprünge 12. Die Enden der zweiten Rastvorsprungsabschnitte 123, 724 sind zum gemeinsamen Grundkörper 100 hin bzw. zu der durch die Endkanten 103 sowie die zentrale Bugkante 102 festgelegte Ebene geneigt.

Zur einfachen Montage sind Im Bereich des W-förmigen Profils 101 vier Befestigungselemente 107 angeordnet, die zur werkzeuglosen und lösbaren Befestigung der Kabelhalterung 50 mit einem Gerät 60 bzw. mit dessen Gestell 61 ermöglichen. Eine bevorzugte Anordnung der in den **Fig. 1 bis 7** dargestellten Kabelhalterung 50 ist in **Fig. 8** dargestellt. Das Gerät 60 in diesem Fall umfasst ein Gestell 61 und mehrere Wandelemente, die ein Gerätegehäuse bilden und einen Geräteinnenraum umschließen.

Die einzelnen Kanten des W-förmigen Profils 101 der Kabelhalterung 50 stehen im rechten Winkel zueinander. **Fig. 8** zeigt die Kabelhalterung 50 auf einem gewinkelten Eckprofil des Gestelles 61 eines Gerätes 60 montiert, wobei die einzelnen Befestigungsmittel 107 in Ausnehmungen auf dem Eckprofil des Gestells 61 eingreifen und so eine lösbare Befestigung der Kabelhalterung 50 auf dem Gestell 61 ermöglichen. Ferner zeigt **Fig. 8** ein Kabel 2, das in einem der beiden Kanalberelche 13 der Kabelhalterung 50 geführt ist.

Der Grundkörper 10, 100 der Kabelhalterung 50 weist an den den Rastvorsprüngen 11, 12 gegenüberliegenden Bereichen eine Ausnehmung 105 auf. Weiters sind zusätzliche Ausnehmungen vorgesehen, in denen sich die Befestigungsmittel 107 zur Befestigung am Gestell 61 des Gerätes 60 befinden. Der Kanalquerschnitt beider Kanalbereiche 13, 13' der in den Fig. 1 bis 7 dargestellten Ausführungsform der Erfindung bleibt über die gesamte Längserstreckung der jeweiligen Kanalbereiche 13, 13' gleich.

Die Rastvorsprünge 11, 12 sind im vorliegenden Ausführungsbeispiel der Erfindung elastisch biegsam und federnd ausgebildet und bestehen aus Kunststoff, nämlich aus Polyethylen. Die Federwirkung der Rastvorsprünge 11, 12 ist derart ausgestaltet, dass die Rastvorsprünge 11, 12 nach ihrer Verbiegung und Verschwenkung im Zuge des Einbringens der Kabel 2 in den Kanalbereich 13, 13' wieder in ihre ursprüngliche Stellung zurückgehen. Die Konsistenz des Polyethylens ist dabei so gewählt, dass die Rastvorsprünge eine Biegesteifigkeit und Elastizität aufweisen, die ein Verschwenken der einzelnen Rastvorsprünge 11, 12 ermöglicht, sodass ein Kabel durch Druck auf die Rastvorsprünge 11, 12 in den Kanalbereich 13, 13' eingebracht werden kann.

Alternativ kann das Kabelhalterungselement 1 auch aus Polypropylen oder anderen elastisch biegbaren und federnden Kunststoffen hergestellt werden. Im vorliegenden Fall sind nicht nur die Rastvorsprünge 11, 12, sondern die gesamte Kabelhalterung 50 aus Kunststoff ausgebildet.

In den **Fig. 9 bis 16** ist eine **zweite Ausführungsform** einer erfindungsgemäßen Kabelhalterung 50 dargestellt. Die zweite Ausführungsform der Erfindung entspricht mit Ausnahme der im folgenden dargestellten Abweichungen der ersten Ausführungsform der Erfindung.

Der gemeinsame Grundkörper 100 dieser Kabelhalterung 50 ist im Gegensatz zur ersten Ausführungsform flach und eben ausgebildet, die einzelnen Rastvorsprünge 11, 12 sind auch auf Vorsprüngen 17, 18 befindlichen Bereichen 111, 121 geordnet, die parallel zu der vom Grundkörper 100 festgelegten Ebene verlaufen. Der gemeinsame Grundkörper 100 weist eine Anzahl von Befestigungsmitteln 107 auf, mittels derer die Kabelhalterung 50 am Gestell 61 eines Gerätes 60 ohne Werkzeug lösbar angeordnet werden kann. Wie im ersten Ausführungsbeispiel umfasst die hier dargestellte Kabelhalterung 50 zwei Kanalbereiche 13, 13', die nebeneinander angeordnet sind und durch einen zentral angeordneten Vorsprung 17, 18 voneinander getrennt sind. Wie beim ersten Ausführungsbeispiel gehen die drei Vorsprünge 17, 18 des Grundkörpers 100 von diesem ab und tragen an ihrem, dem Grundkörper 100 fernen Ende die einzelnen Rastvorsprünge 11, 12. Die Form, Gestalt und Ausrichtung der einzelnen Rastvorsprünge 11, 12 ist identisch wie im ersten Ausführungsbeispiel.

Der wesentliche Unterschied zwischen der ersten und der zweiten Ausführungsform der Erfindung liegt darin, dass der Grundkörper 100 der zweiten Ausführungsform eine flache und ebene Gestalt aufweist. Die Vorsprünge setzen unmittelbar an der Ebene des Grundkörpers 100 an. Aufgrund der Form des Grundkörpers 100 kann die Kabelhalterung 50, wie im zweiten Ausführungsbeispiel der Erfindung dargestellt, vorteilhafterweise zur Montage an ebenen Unterlagen verwendet werden.

In **Fig. 16** ist eine Innenverkabelung eines Gerätes 60 näher dargestellt, wobei eine Vielzahl von Kabelhalterungen, wie im zweiten Ausführungsbeispiel der Erfindung anhand der **Fig. 9 bis 15** dargestellt, verwendet wird. Im Gegensatz zu den in **Fig. 9 bis 15** dargestellten Ausführungsbeispielen von Kabelhalterungen 50 werden in **Fig. 16** Kabelhalterungen 50 verwendet, die vier von einander abgetrennte Kanalbereiche 13 aufweisen, die auf einem gemeinsamen Grundkörper 10 angeordnet sind.

Die Kabelhalterungen 50 sind hierbei über Befestigungselemente 107 der Grundplatte 10 an bzw. mit Gehäuseteilen des Gerätes 60 verschraubt. Alternativ kann eine werkzeuglose Befestigung vorgesehen sein, beispielsweise können die Befestigungselemente 107 durch eine Bohrung gebildet sein, in welcher Bohrung flexible Lamellenabschnitte angeordnet sind, so dass ein in die Bohrung gesteckter stabförmiger Körper durch die Lamellenabschnitte widerhakenförmig fixiert wird. Die flexible Lamellenabschnitte können aus demselben Material wie die Grundplatte 10 gebildet sein.

Wie aus dem mit dem Zeichen A versehenen Bereich aus **Fig. 16** ersichtlich, kann die Führung von Kabeln 2, 2', 2", 2'" oder Kabelbäumen im Gerät 60 auf unterschiedliche Art erfolgen. Die Kabelhalterung 50 weist vier unterschiedliche Kanalbereiche 13 auf, wobei sämtliche der Kabel 2, 2', 2", 2"' nur durch zwei der vier Kanalbereiche 13 verlaufen, während die übrigen Kanalbereiche 13 der Kabelhalterung 50 frei von Kabeln 2 sind. Eine gezielte Manipulation eines Gerätes 60 ist jedoch ausschließlich dann wirksam möglich, wenn die Person, der eine Manipulation durchführt, die exakte Position der einzelnen Kabel 2, 2', 2", 2'" kennt und somit eine wirksame Unterbrechung von außen vornehmen kann. Werden die Kabel 2, 2', 2", 2'" hingegen stets auf unterschiedliche Weise geführt, so ist eine wirksame Manipulation wesentlich erschwert. Durch das einfache Lösen und Wiedereinfügen von Kabeln 2, 2', 2", 2'" in den bzw. aus dem Kanalbereich 13 ist eine einfache Neuverkabelung möglich und eine von außen erfolgende Manipulation der einzelnen Kabel 2, 2', 2", 2"' erschwert.

Sowohl die erste als auch die zweite Ausführungsform sind symmetrisch um eine Ebene ausgebildet, die durch den zentralen Vorsprung 17, 18 verläuft und normal auf die von den Endkanten festgelegten Ebene steht.

Eine **dritte Ausführungsform** der Erfindung einer Kabelhalterung 50 ist in **Fig. 17** dargestellt und weist einen ebenen und flachen gemeinsamen Grundkörper 100 auf, die vier Befestigungsmittel 107 zur Befestigung des gemeinsamen Grundkörpers 100 bzw. der Kabelhalterung 50 am Gestell 61 eines Gerätes 60 aufweist. Auf dem gemeinsamen Grundkörper 10 sind vier Kabelhalterungselemente 1 vorgesehen, die gleich ausgerichtet und nebeneinander angeordnet sind.

Jedes der Kabelhalterungselemente 1 weist zwei Vorsprünge 17, 18 auf, die von dem gemeinsamen Grundkörper 100 annähernd senkrecht und/oder normal abstehen. An dem den Grundkörper 100 fernen Ende der Vorsprünge 17, 18 stehen von den Vorsprüngen 17, 18 Rastvorsprünge 11, 12 sowie weitere Rastvorsprünge 15, 16 ab. Wie in den vorangehenden Ausführungsbeispielen dargestellt, umfassen die Rastvorsprünge 11, 12 jeweils einen ersten Rastvorsprungsabschnitt 113, 114, der im Wesentlichen normal mit einem Winkel von 70-90°, insbesondere von 85-90° zum gemeinsamen Grundkörper 10 verläuft, einen Bogen 115, 125 in dem der Rastvorsprung 11, 12 gekrümmt ist, sowie einen zweiten, zum Grundkörper 10 annähernd parallel verlaufenden Rastvorsprungsabschnitt 114, 124. Die Rastvorsprünge 11, 12 stehen kammartig von den jeweiligen Vorsprüngen 17, 18 ab, wobei die Enden 110, 120 der jeweiligen Rastvorsprünge 11, 12 jeweils zwischen zwei gegenüberliegenden Bereichen 111, 121 bzw. vom jeweils gegenüberliegenden Vorsprung 17, 18 abstehenden Rastvorsprüngen 11, 12 hineinragen bzw. angeordnet sind.

Diejenigen Bereiche 111, 121 der Kabelhalterung 50 an dem dem Grundkörper 10 fernen Ende der Vorsprünge 17, 18 verlaufen zueinander parallel und liegen in derselben Ebene. Wie in den beiden vorangehenden Beispielen ist die Anzahl der Rastvorsprünge 11, 12, die von den beiden Bereichen 111, 121 abstehen, gleich.

Alternativ kann für sämtliche Ausführungsformen der Erfindung natürlich vorgesehen sein, dass eine Abweichung zwischen der der Anzahl der Rastvorsprünge 11, die vom ersten Bereich 111 abstehen von der Anzahl der Rastvorsprünge 12, die vom zweiten Bereich 121 abstehen unterschiedlich ist. Besonders vorteilhaft ist es, wenn sich die jeweilige Anzahl der von den beiden Bereichen 111, 121 abstehenden Rastvorsprünge 11, 12 vorzugsweise um eins unterscheidet. Insbesondere ist eine Abweichung um höchstens eins ohne Beeinträchtigung der Funktionalität der Kabelhalterung 50 jedenfalls möglich.

In dem in **Fig. 17** dargestellten Ausführungsbeispiel liegen sämtliche zweiten Rastvorsprungsabschnitte 114, 124 in derselben Ebene, wobei diese Ebene parallel zur Ebene des Grundkörpers 10 verläuft.

Für jeden Rastvorsprung 11, 12, dessen Ende zwischen zwei vom jeweils gegenüberliegenden Bereich 111, 121 abstehenden Rastvorsprüngen 11, 12 angeordnet ist, ist ein vom gegenüberliegenden Bereich 111, 121 abstehender weiterer Rastvorsprung 15, 16 vorgesehen, dessen Ende 151, 161 dem Ende des jeweiligen Rastvorsprunges 11, 12 angenähert ist und gegenüber liegt. Im vorliegenden Ausführungsbeispiel liegen auch die weiteren Rastvorsprünge 15, 16 in derselben parallel zum Grundkörper 10 verlaufenden Ebene, in der auch die zweiten Rastvorsprungsabschnitte 123, 124 liegen. Die Stirnseiten der Enden 110, 120, 151, 161 der Rastvorsprünge 11, 12 und der weiteren Rastvorsprünge 15, 16 liegen einander jeweils gegenüber.

Die weiteren Rastvorsprünge 15, 16 weisen einen ersten Rastvorsprungsabschnitt 151, 161 auf, der vom Grundkörper 10 bzw. vom Vorsprung 17, 18 des Grundkörpers 10 im Wesentlichen normal mit einem Winkel von 70°-90°, insbesondere 85°-90°, absteht. Der zweite Rastvorsprungsabschnitt 152, 162 des weiteren Rastvorsprunges 15, 16 setzt den ersten Rastvorsprungsabschnitt 151, 161 an seinem, dem Grundkörper 10 fernen Ende fort. Die weiteren Rastvorsprünge 15, 16 weisen jeweils eine Abbiegung, im folgenden als Bogen 153, 163 bezeichnet, auf, der die jeweiligen ersten und zweiten Rastvorsprungsabschnitte 151, 152, 161, 162 miteinander verbindet, wobei die ersten und zweiten Rastvorsprungsabschnitte 151, 152, 161, 162 zueinander in einem annähernd rechten Winkel stehen. Die Form und Ausrichtung der ersten und/oder zweiten Rastvorsprungsabschnitte 151, 152, 161, 162 der weiteren Rastvorsprünge 15, 16 entspricht der Form und Ausrichtung der ersten und zweiten Rastvorsprungsabschnitte 113, 114, 123, 124 der Rastvorsprünge 11, 12.

Die Länge der ersten Rastvorsprungsabschnitte 151, 161 der weiteren Rastvorsprünge 15, 16 entspricht dabei der Länge der ersten Rastvorsprungsabschnitte 113, 123 der Rastvorsprünge 11, 12. Die Form und Ausrichtung der ersten und zweiten Rastvorsprungsabschnitte 151, 152, 161, 162 der weiteren Rastvorsprünge 15, 16 entsprechen der Form und Ausrichtung der ersten und/oder zweiten Rastvorsprungsabschnitte 113, 114, 123, 124 der Rastvorsprünge 11, 12. Die weiteren Rastvorsprünge 15, 16 sind - ebenso wie die Rastvorsprünge 11, 12, - untereinander gleich ausgebildet und gleich ausgerichtet.

Wie auch bei den beiden vorigen Ausführungsbeispielen weist jedes der Kabelhalterung 50 zugehörige Kabelhalterungselement 1 jeweils 2 Bereiche 111, 121 auf den beiden Vorsprüngen 17, 18 auf, von denen die Rastvorsprünge 11, 12 abstehen. Diejenigen Teile der Bereiche 111, 121, von denen die Rastvorsprünge abstehen, liegen jeweils auf einer Geraden 116, 117. Jedes Kabelhalterungselement 1 der in **Fig. 17** dargestellten Kabelhalterung 50 weist zwei Vorsprünge 17, 18 auf.

Auf dem ersten der beiden Vorsprünge 17 ist ein erster Bereich 111 vorgesehen, auf dem eine Anzahl von ersten Rastvorsprüngen 11 in Richtung des gegenüberliegenden zweiten Vorsprunges 18 absteht. Analog ist auf dem zweiten Vorsprung 18 ein zweiter Bereich 121 vorgesehen, von dem aus eine Anzahl von zweiten Rastvorsprüngen 12 in Richtung des ersten Vorsprunges 17 abstehen. Sämtliche ersten Rastvorsprünge 11 stehen von Teilbereichen des ersten Bereiches 111 ab, die auf der ersten Geraden 116 liegen. Sämtliche der zweiten Rastvorsprünge 12 stehen von Teilbereichen des zweiten Bereiches 121 auf dem zweiten Vorsprung 18 ab, die auf einer zweiten Geraden 126 liegen.

Sämtliche ersten Geraden 116 und zweiten Geraden 126 der Kabelhalterungselementen 1 der in **Fig. 17** Kabelhalterung 50 liegen zueinander parallel.

Auch die weiteren Rastvorsprünge 15, 16 stehen jeweils von Teilbereichen des ersten oder zweiten Bereiches 111, 121 ab, die auf der jeweiligen ersten oder zweiten Geraden 116, 126 liegen. Eine Anzahl der weiteren Rastvorsprünge 15, 16, im Folgenden als erste weitere Rastvorsprünge 15 bezeichnet, stehen von Teilbereichen des ersten Bereiches 111 ab, die auf der ersten Geraden 116 liegen. Die übrigen, weiteren Rastvorsprünge, im Folgenden als zweite weitere Rastvorsprünge 16 bezeichnet, stehen von Teilbereichen des zweiten Bereiches 121 ab, die auf der zweiten Geraden 126 liegen. Zwischen zwei Rastvorsprüngen 11, 12, die benachbart auf einem Bereich 111, 121 liegen, ist jeweils ein weiterer Rastvorsprung 15, 16 angeordnet. Die zweiten Rastvorsprungsabschnitte 114, 124 der Rastvorsprünge 11, 12 und die zweiten Rastvorsprungsabschnitte 152, 162 der weiteren Rastvorsprünge 15, 16 liegen in derselben Ebene.

Die einzelnen Rastvorsprungsabschnitte 113, 114, 123, 124 sind einstückig- aus einem flachen Körper, oder einem Profilstab, ausgebildet, der zwischen dem ersten und dem zweiten Rastvorsprungsabschnitt 113, 114, 123, 124 einen Bogen 115, 125 aufweist. Die Rastvorsprünge 11, 12 sind elastisch biegsam und federnd ausgebildet, wobei das Verhältnis der Breite in Längserstreckungsrichtung des Kanals bzw. des Kabelhalterungselements 1 zur Dicke der Rastvorsprünge 11, 12 im Bereich zwischen 4:1 bis 4:1,5, im vorliegenden Ausführungsbeispiel den vorteilhaften Wert von 4:1,3, aufweist.

Die gesamte Kabelhalterung 50 besteht im vorliegenden Ausführungsbeispiel aus Polyethylen. Die Konsistenz des Polyethylens ist dabei so gewählt, dass die Rastvorsprünge 11, 12 eine Biegesteifigkeit und Elastizität aufweisen, die ein Verschwenken der einzelnen Rastvorsprünge 11, 12 ermöglicht, sodass ein Kabel durch Druck auf die Rastvorsprünge 11, 12 in den Kanalbereich eingebracht werden kann. **Weiters ist in dieser besonderen Ausgestaltung der Erfindung die gesamte Kabelhalterung 50 elnstückig ausgebildet.**

Alternativ kann die in Fig. 17 dargestellte Kabelhalterung 50 auch aus Polypropylen oder einem anderen Kunststoff hergestellt werden, der eine ähnliche Konsistenz beziehungsweise Materialeigenschaft, insbesondere Elastizität und Biegesteifigkeit, aufweist.

Ein weitere, in **Fig. 18** dargestellte **vierte Ausführungsform** der Erfindung betrifft ein alleinstehendes Kabelhalterungselement 1 mit einem Grundkörper 10. Das Kabelhalterungselement 1, 1' bildet einen abgetrennten Kanalbereich 13 aus. Der Grundkörper 100 ist plattenförmig mit einer Grundplatte ausgebildet, an deren Endkanten 103 Vorsprünge 17, 18 abstehen.

Diese Vorsprünge 17, 18 sind im vorliegenden Ausführungsbeispiel normal zu der durch die Grundplatte festgelegte Ebene stehend ausgebildet und schließen an die Endkanten 103 an und setzen diese fort. Die Vorsprünge 17, 18 erstrecken sich in Längsrichtung über die gesamte Länge des Kabelhalterungselements 1 und stehen normal auf die durch die Endkanten 103 festgelegte Ebene.

An dem jeweiligen, der jeweiligen Endkante 103 fernen Ende des jeweiligen Vorsprunges 17, 18 ist eine Fläche mit einem Bereich 111, 121 ausgebildet, von der einzelne Rastvorsprünge 11, 12 abstehen.

Im Bezug auf das erste Kabelhalterungselement 1, das den ersten Kanalbereich 13 abgrenzt, werden die auf dem der Endkante 103 fernen Ende des Vorsprunges 17, 18 befindlichen Bereiche 111, 121 als einander gegenüberliegende Bereiche 111, 121 bezeichnet.

Im vorliegenden Ausführungsbeispiel umfassen die Rastvorsprünge 11, 12 - wie auch bei den übrigen Ausführungsbeispielen - jeweils einen ersten Rastvorsprungsabschnitt 113, 123 sowie einen zweiten Rastvorsprungsabschnitt 114, 124. Die Rastvorsprünge 11, 12 sind L-förmig oder winkelhakenförmig ausgebildet und weisen jeweils zwei Rastvorsprungsabschnitte 113, 114, 123, 124 auf. Jeder Rastvorsprung 11, 12 weist jeweils einen ersten Rastvorsprungsabschnitt 113, 123 und einen zweiten Rastvorsprungsabschnitt 114, 124 auf. Die ersten Rastvorsprungsabschnitte 113, 123 stehen senkrecht und/oder normal zu den Bereichen 111, 121, von denen sie abstehen. Der zweite Rastvorsprungsabschnitt 114, 124 setzt den ersten Rastvorsprungsabschnitt 113, 123 an dessen dem jeweiligen Bereich 111, 121 fernen Ende fort.

Die Rastvorsprungsabschnitte 113, 114, 123, 124 sind einstückig ausgebildet und aus einem flachen Körper ausgebildet. Im vorliegenden Fall werden gebogene Profilstäbe als Rastvorsprünge 11, 12 herangezogen. Diese Profilstäbe bzw. flachen Körper weisen zwischen dem ersten und dem zweiten Rastvorsprungsabschnitt 113, 114, 123, 124 jeweils einen Winkelabschnitt bzw. Bogen 115, 125 auf. Dieser Bogen 115, 125 kann derart ausgebildet sein, dass die beiden Rastvorsprungsabschnitte 113, 114, 123, 124 einen Winkel von weniger als 90°, im vorliegenden Fall etwa 75°, einschließen.

Die zweiten Rastvorsprungsabschnitte 123, 124 stehen vom Ende des ersten Rastvorsprungsabschnittes in Richtung des jeweils gegenüberliegenden Bereiches 111, 121 ab. Die einzelnen Rastvorsprünge 11, 12 sind kammartig angeordnet, das heißt, sie sind beabstandet angeordnet und gleich ausgerichtet, wobei alle vom selben Bereich 111, 121 des ersten Kabelhalterungselements 1, 1' abstehenden Rastvorsprünge 11, 12 zu ihren jeweils benachbart angeordneten Rastvorsprüngen 11, 12 jeweils denselben Abstand haben. Die Rastvorsprünge 11, 12 stehen von Punkten auf den Bereichen 111, 121 ab, die jeweils auf einer gemeinsamen Geraden 116, 117 angeordnet sind. Die einander gegenüberliegenden Rastvorsprünge 11, 12 greifen berührungslos ineinander, wobei die Enden 110, 120 der Rastvorsprünge 11, 12 bzw. die Enden 110, 120 der zweiten Rastvorsprungsabschnitte 114, 124, einander berührungslos angenähert sind.

Jedes Ende 110, 120 des jeweiligen Rastvorsprungs 11, 12 ist zwischen zwei vom jeweils gegenüberliegenden Bereich 111, 121 abstehenden Rastvorsprünge 11, 12 angeordnet bzw. ragt in den Zwischenbereich zwischen zwei vom gegenüberliegenden Bereich 111, 112 abstehenden Rastvorsprüngen 11, 12 hinein. Die einzelnen Enden 110, 120 der Rastvorsprünge 11, 12 bzw. der zweiten Rastvorsprungsabschnitte 114, 124 sind so angeordnet, dass sie die vom gegenüberliegenden Bereich 111, 112 abstehenden Rastvorsprünge 11, 12 nicht berühren, Im vorliegenden Ausführungsbeispiel sind sämtliche Rastvorsprünge 11, 12 untereinander gleich ausgebildet und ausgerichtet und berühren einander gegenseitig nicht.

Die Anordnung der Rastvorsprünge 11, 12 erfolgt derart, dass der Kanalbereich 13 einen geschlossenen oder U-förmigen Kanalquerschnitt ausweist.

Im vorliegenden Ausführungsbeispiel umfasst das Kabelhalterungselement 1 jeweils vier erste Rastvorsprünge 11 und vier zweite Rastvorsprünge 12. Die Enden der zweiten Rastvorsprungsabschnitte 123, 124 sind zum gemeinsamen Grundkörper 100 hin bzw. zu der durch die Endkanten 103 festgelegte Ebene geneigt.

Zur einfachen Montage sind im Bereich der Grundplatte zwei Befestigungselemente 107 angeordnet, die zur werkzeuglosen und lösbaren Befestigung der Kabelhalterung 50 an ein und/oder mit einem Gerät 60 und/oder mit dessen Gestell 61 ermöglichen.

Die Rastvorsprünge 11, 12 sind im vorliegenden Ausführungsbeispiel der Erfindung elastisch biegsam und federnd ausgebildet und bestehen aus Kunststoff, nämlich aus Polypropylen. Die Konsistenz des Polypropylens ist dabei so gewählt, dass die Rastvorsprünge 11, 12 eine Biegesteifigkeit und Elastizität aufweisen, die ein Verschwenken der einzelnen Rastvorsprünge 11, 12 ermöglicht, sodass ein Kabel 2 durch Druck auf die Rastvorsprünge 11, 12 in den Kanalbereich 13 eingebracht werden kann. Nach dem Verbiegen kehren die Rastvorsprünge 11, 12 wieder in ihre ursprüngliche Stellung zurück. Alternativ kann das Kabelhalterungselement 1 auch aus Polyethylen oder anderen elastisch biegbaren oder federnden Kunststoffen hergestellt werden.

Beim Einlegen eines Kabels 2 werden die Rastvorsprünge 11, 12 In Richtung auf den Grundkörper 10 oder den gemeinsamen Grundkörper 100 durch den Druck des Kabels 2 abgebogen und lassen das Kabel 2 in den Kanalquerschnitt eintreten. Befindet sich das Kabel im Kanalquerschnitt, bewegen sich die Rastvorsprünge 11 aufgrund ihrer Elastizität wieder in ihre Ausgangsstellung zurück. Die Rastvorsprünge 11, 12 sind somit in einer Ebene normal zur Längsrichtung des Kabelhalterungselements 1 federnd bzw. elastisch verschwenkbar.

Die dargestellten flach ausgebildeten Rastvorsprünge 11, 12 stehen von den Bereichen 111, 121 ab und begrenzen den Kanalbereich 13. Die Rastvorsprünge 11, 12 sind als Profilteile gebogen ausgebildet und weisen in ihrer. Verlaufsrichtung ein flaches Profil mit einem konstanten Querschnitt auf. Die Verlaufsrichtung Rastvorsprungs 11, 12 verläuft in einer Ebene normal zur Längsrichtung des Kabelhalterungselements 1. Das flache Profil hat in Längsrichtung des Kabelhalterungselements 1 eine wesentlich größere Ausdehnung als in einer Richtung normal zur Längsrichtung des Kabelhalterungselements 1. Vorteilhaft ist, wie bereits erwähnt, ein Verhältnis 4:1 bis 4:1,5, insbesondere 4:1,3, zwischen der Ausdehnung der maximalen Abmessung des flachen Profils des Rastvorsprungs 11, 12 in Längsrichtung des Kabelhalterungselements 1 und der Abmessung des Profils des Rastvorsprungs 11, 12 in einer Richtung normal hierzu.

## Patentansprüche

1. Kabelhalterung umfassend eine Anzahl von Kabelhalterungselementen (1) zur Aufnahme eines oder mehrerer Kabel (2) umfassend einen Grundkörper (10) sowie eine Anzahl von vom Grundkörper (10) abstehenden Rastvorsprüngen (11, 12), die von voneinander gegenüberliegenden Bereichen (111, 121) des Grundkörpers (10) abstehen, wobei die Rastvorsprünge (11, 12), und gegebenenfalls der Grundkörper (10), einen Kanalbereich (13) zur Führung der Kabel (2) umschließen, abgrenzen und/oder festlegen, wobei die Rastvorsprünge (11, 12), vorzugsweise berührungslos und/oder kammartig ineinander greifen, sodass das Ende (110, 120) zumindest eines der Rastvorsprünge (11, 12), die von einem Bereich (111, 121) abstehen, zwischen zwei vom jeweils gegenüberliegenden Bereich (111, 121) abstehenden Rastvorsprüngen (11, 12) angeordnet ist und/oder ragt, **dadurch gekennzeichnet,**
**dass** die einzelnen Kabelhalterungselemente (1) gleich ausgerichtet auf einem gemeinsamen Grundkörper (10) angeordnet sind, und
**dass** der gemeinsame Grundkörper (10) flach und/oder eben ausgebildet ist und die einzelnen Rastvorsprünge (11, 12) nach derselben Seite vom Grundkörper (10) abstehen, **und**
**dass** die einzelnen Kabelhalterungselemente (1) auf dem Grundkörper (10) gleich ausgerichtet und gegebenenfalls nebeneinander und/oder hintereinander angeordnet sind.

2. Kabelhalterung, umfassend eine Anzahl von Kabelhalterunaselementen (1), zur Aufnahme eines oder mehrerer Kabel (2) umfassend einen Grundkörper (10) sowie eine Anzahl von vom Grundkörper (10) abstehenden Rastvorsprüngen (11, 12), die von voneinander gegenüberliegenden Bereichen (111, 121) des Grundkörpers (10) abstehen, wobei die Rastvorsprünge (11, 12), und gegebenenfalls der Grundkörper (10), einen Kanalbereich (13) zur Führung der Kabel (2) umschließen, abgrenzen und/oder festlegen, wobei die Rastvorsprünge (11, 12), vorzugsweise berührungslos und/oder kammartig ineinander greifen, sodass das Ende (110, 120) zumindest eines der Rastvorsprünge (11, 12), die von einem Bereich (111, 121) abstehen, zwischen zwei vom jeweils gegenüberliegenden Bereich (111, 121) abstehenden Rastvorsprüngen (11, 12) angeordnet ist und/oder ragt,
**dadurch gekennzeichnet, dass**
der gemeinsame Grundkörper (10) ein W-förmiges Winkelprofil (101) ausbildet, wobei die Kabelhalterung zwei Kabelhalterungselemente umfasst, und wobei die Rastvorsprünge (11, 12) beider Kabelhalterungselemente (1) von der zentralen Bugkante (102) des W-förmigen Winkelprofils (101) abstehen und zudem Rastvorsprünge (11, 12) jeweils eines der Kabelhalterungselemente (1) von den Endkanten (103) des W-förmigen Winkelprofils abstehen, und
wobei **gegebenenfalls** von der Bugkante (102) und/oder der Endkante (103) Vorsprünge (17, 18) abstehen, von denen die Rastvorsprünge (11, 12) abstehen, **und/oder** wobei **gegebenenfalls** das W-förmige Winkelprofil (101) im Bereich der zentralen Bugkante (102), vorzugsweise auch in den beiden Endkanten (103, 104), einen rechten Winkel aufweist.

3. Kabelhalterung nach Anspruch 1 oder 2, **dadurch gekennzeichnet, dass** die den Kanalbereich (13) begrenzenden Rastvorsprünge (11, 12) L-förmig ausgeformt sind und einander gegenüberliegend beabstandet sind, so dass der Kanalbereich (13) einen geschlossenen und/oder U-förmigen Kanalquerschnitt aufweist, **und/oder,**
dass in Längserstreckung des Kanalbereichs (13) die Rastvorsprünge (11, 12) derart angeordnet sind, dass sie, vorzugsweise berührungslos, kammartig ineinander greifen, sodass das Ende (110, 120) zumindest eines Rastvorsprunges (11, 12) zwischen zwei jeweils gegenüberliegenden Rastvorsprüngen (11, 12) angeordnet ist und/oder ragt und/oder,
dass die Rastvorsprünge (11, 12) elastisch biegbar und fedemd ausgebildet sind, sodass sie gegenüber dem Grundkörper (10) des Kabelhalterungselements (1) verschwenkbar sind und nach dem Verschwenken wieder in ihre Ausgangsposition zurückkehren.

4. Kabelhalterung nach einem der vorangehenden Ansprüche, **dadurch gekennzeichnet, dass** die Rastvorsprünge (11, 12), insbesondere winkelhakenförmig, gebogen ausgebildet sind und zwei Rastvorsprungabschnitte (113, 114, 123, 124) aufweisen, wobei der erste Rastvorsprungabschnitt (113, 123) einem Winkel von 70°-90°, vorzugsweise 85°-90°, insbesondere genau senkrecht und/oder normal, vom jeweiligen Bereich (111, 121) absteht und wobei der zweite Rastvorsprungsabschnitt (114, 124) den ersten Rastvorsprungsabschnitt (113, 123) an der dem jeweiligen Bereich (111, 121) fernen Ende fortsetzt und mit einem Winkel, insbesondere mit einem Winkel zwischen 70° bis 110°, vorzugsweise 90°, zum ersten Rastvorsprungsabschnitt (113, 123) in Richtung der Rastvorsprünge (11, 12) gerichtet absteht, die vom jeweils gegenüberliegenden Bereich (111, 121) abstehen, **und/oder**
dass die beiden Rastvorsprungsabschnitte (113, 114, 123, 124) einstückig, insbesondere jeweils aus einem flachen Körper und/oder einem Profilstab, ausgebildet sind, der zwischen dem ersten und dem zweiten Rastvorsprungsabschnitt (113, 114, 123, 124) einen Bogen (115, 125) aufweist.

5. Kabelhalterung nach einem der vorangehenden Ansprüche, **dadurch gekennzeichnet, dass** die beiden Rastvorsprungabschnitte (113, 114, 123, 124) einen Winkel von weniger als oder gleich 90° einschließen **und/oder,**
dass die beiden Bereiche (111, 121), von denen die Rastvorsprünge (11, 12) abstehen, zueinander parallel verlaufen und/oder in einer Ebene liegen und/oder,
dass die jeweilige Anzahl der Rastvorsprünge (11, 12), die von den beiden Bereichen (111, 121) abstehen, um höchstens eins voneinander abweicht **und/oder,**
dass die Enden der Rastvorsprünge (11, 12) oder die Enden der zweiten Rastvorsprungsabschnitte (123, 124) zum Grundkörper (10) hin geneigt sind.

6. Kabelhalterung nach einem der vorangehenden Ansprüche, **dadurch gekennzeichnet, dass** für jeden Rastvorsprung (11, 12), dessen Ende zwischen zwei vom jeweils gegenüberliegenden Bereich (111, 121) abstehenden Rastvorsprüngen (11, 12) angeordnet ist, ein vom gegenüberliegenden Bereich (111, 121) abstehender weiterer Rastvorsprung (15, 16) vorgesehen ist, dessen Ende (150, 160) dem Ende des jeweiligen Rastvorsprungs (11, 12) angenähert ist und gegenüberliegt, wobei insbesondere die Stirnseiten der Enden (110, 120, 150, 160) des weiteren Rastvorsprungs (15, 16) und des Rastvorsprungs (11, 12) einander gegenüberliegen.

7. Kabelhalterung nach Anspruch 5, **dadurch gekennzeichnet, dass** die weiteren Rastvorsprünge (15, 16) jeweils einen ersten Rastvorsprungsabschnitt (151, 161) aufweisen, der vom Grundkörper (10) im Winkel, insbesondere in einem Winkel von 70° bis 110°, vorzugsweise 90°, absteht und einen zweiten Rastvorsprungsabschnitt (152, 162) aufweisen, der den ersten Rastvorsprungsabschnitt (151, 152) fortsetzt und vom ersten Rastvorsprungsabschnitt (151, 152) absteht,
dass **insbesondere** die Form und/oder Ausrichtung des ersten und/oder zweiten Rastvorsprungsabschnitts (151, 152, 161, 162) der weiteren Rastvorsprünge (15, 16) der Form und Ausrichtung des ersten und/oder zweiten Rastvorsprungabschnitts (113, 114, 123, 124) der Rastvorsprünge (11, 12) entspricht, und
dass **insbesondere** die Länge des ersten Rastvorsprungabschnitts (151, 161) der weiteren Rastvorsprünge (15, 16) der Länge des ersten Rastvorsprungabschnitts (113, 123) der Rastvorsprünge (11, 12) entspricht.

8. Kabelhalterung nach einem der vorangehenden Ansprüche, **dadurch gekennzeichnet, dass** die vom ersten Bereich (111) und/oder die vom zweiten Bereich (121) abstehenden Rastvorsprünge (11, 12) gleich ausgebildet und/oder ausgerichtet sind, und/oder dass alle Rastvorsprünge (11, 12) gleich ausgebildet sind **und/oder,**
dass die vom ersten Bereich (111) und/oder die vom zweiten Bereich (121) abstehenden weiteren Rastvorsprünge (15, 16) gleich ausgebildet und/oder ausgerichtet sind, und/oder dass alle weiteren Rastvorsprünge (15, 16) gleich ausgebildet sind.

9. Kabelhalterung nach einem der vorangehenden Ansprüche, **dadurch gekennzeichnet, dass** die Rastvorsprünge (11, 12) von zwei Bereichen (111, 121) abstehen, wobei eine Anzahl von ersten Rastvorsprüngen (11) vom ersten der beiden Bereiche (111) absteht und eine Anzahl von zweiten Rastvorsprüngen (12) vom zweiten der beiden Bereiche (121) absteht, **und/oder**
dass die ersten Rastvorsprünge (11) von Teilbereichen des ersten Bereichs (111) abstehen, die auf einer ersten Geraden (116) liegen und/oder dass die zweiten Rastvorsprünge (12) von Teilbereichen des zweiten Bereichs (121) abstehen, die auf einer zweiten Geraden (126) liegen, wobei die erste Gerade (116) und die zweite Gerade (126) vorzugsweise zueinander parallel angeordnet sind, **und/oder,**
dass eine Anzahl der weiteren Rastvorsprünge (15, 16) und/oder von Teilbereichen des zweiten Bereichs (121) absteht, die auf der ersten Geraden (116) liegen, und die übrigen der weiteren Rastvorsprünge (16) von Teilbereichen des zweiten Bereichs (121) abstehen, die auf der zweiten Geraden (126) liegen **und/oder,**
dass zwischen je zwei Rastvorsprüngen (11, 12) jeweils ein weiterer Rastvorsprung (15, 16) angeordnet ist **und/oder,**
dass die zweiten Rastvorsprungsabschnitte (114, 124) der Rastvorsprünge (11, 12), gegebenenfalls auch die zweiten Rastvorsprungsabschnitte (152, 162) der weiteren Rastvorsprünge (15, 16), in derselben Ebene liegen und/oder,
dass der Grundkörper (10) in den den Rastvorsprüngen (11, 12) gegenüberliegenden Bereichen zumindest eine Ausnehmung (105) aufweist.

10. Kabelhalterung nach einem der vorangehenden Ansprüche, **dadurch gekennzeichnet, dass** der Grundkörper (10) zumindest einen, insbesondere zwei, von ihm, insbesondere senkrecht und/oder normal, abstehenden Vorsprung (17, 18) aufweist, von dem die einzelnen Rastvorsprünge (11, 12) und gegebenenfalls die weiteren Rastvorsprünge (15, 16) abstehen und/oder,
dass sich der Kanalquerschnitt des Kanalbereichs (13) zumindest in einem Teilbereich entlang der Längserstreckung des Kanalbereichs (13) verjüngt und/oder erweitert **und/oder,**
dass die Rastvorsprünge (11, 12) elastisch biegsam und/oder federnd ausgebildet sind, **und/oder,**
dass das Verhältnis der Breite in Längsrichtung des Kabelhalterungselements (1) zur Dicke der Rastvorsprünge (11, 12) im Bereich zwischen 4:1 bis 4:1,5, insbesondere bei 4:1,3 liegt,

11. Kabelhalterung nach einem der vorangehenden Ansprüche, **dadurch gekennzeichnet, dass** die Rastvorsprünge (11, 12), gegebenenfalls die weiteren Rastvorsprünge (15, 16) und/oder das gesamte Kabelhalterungselement (1), aus Kunststoff, insbesondere Polyethylen PE und/oder Polypropylen PP, hergestellt ist.

12. Kabelhalterung nach einem der Ansprüche 2 bis 11, **dadurch gekennzeichnet, dass** der Grundkörper (10) Befestigungsmittel (107) zum, **insbesondere** werkzeuglosen lösbaren, Befestigen der Kabelhalterung (50) an einem Gerät, **insbesondere** mit einem Gestell (61) eines Geräts (60), aufweist, **und/oder** dass der gemeinsame Grundkörper (100) in den den Rastvorsprüngen (11, 12) gegenüberliegenden Bereichen jeweils zumindest eine Ausnehmung (105) aufweist.

13. Kabelhalterung nach einem der vorangehenden Ansprüche, **dadurch gekennzeichnet, dass** die ersten und zweiten Geraden (116, 117) zueinander parallel angeordnet sind.

14. Elektronisches Gerät, insbesondere Wett- und/oder Glücksspielgerät, mit einer Kabelhalterung (50) nach einem der vorangehenden Ansprüche.

## Claims

1. A cable holder comprising a number of cable holder elements (1) for receiving one or more cables (2), which comprises a base body (10) as well as a number of snap-in projections (11, 12) protruding from the base body (10), which protrude from opposite areas (111, 121) of the base body (10), the snap-in projections (11, 12) and optionally the base body (10) enclosing, delimiting and/or defining a duct area (13) for guiding the cables (2), **wherein** the snap-in projections (11, 12) preferably interlock without contact and/or in a comblike fashion so that the end (110, 120) of at least one of the snap-in projections (11, 12) protruding from an area (111, 121) is arranged and/or extends between two snap-in projections (11, 12) protruding from the respective opposite area (111, 121), **characterized in that**
the individual cable holder elements (1) are arranged on a common base body (10) and aligned equally, and
the common base body (10) is flat and/or plane and the individual snap-in projections (11, 12) protrude from the base body (10) to the same side,
and
the individual cable holder elements (1) on the base body (10) are aligned equally and optionally arranged side by side and/or one behind the other.

2. A cable holder comprising a number of cable holder elements (1) for receiving one or more cables (2), which comprises a base body (10) as well as a number of snap-in projections (11, 12) protruding from the base body (10), which protrude from opposite areas (111, 121) of the base body (10), the snap-in projections (11, 12) and optionally the base body (10) enclosing, delimiting and/or defining a duct area (13) for guiding the cables (2), wherein the snap-in projections (11, 12) preferably interlock without contact and/or in a comblike fashion so that the end (110, 120) of at least one of the snap-in projections (11, 12) protruding from an area (111, 121) is arranged and/or extends between two snap-in projections (11, 12) protruding from the respectively opposite area (111, 121),
**characterized in that**
the common base body (10) provides a W-shaped angled profile (101), wherein the cable holder comprises two cable holder elements, and wherein snap-in projections (11, 12) of both cable holder elements (1) protrude from the central crook edge of the W-shaped angled profile (101) and snap-in projections (12) of each one of the cable holder elements (1) also project from the trailing edges (103) of the W-shaped angled profile, and
wherein **optionally** projections (17, 18) protrude from the crook edge (102) and/or the trailing edge (103), from which the snap-in projections (11, 12) protrude, **and/or optionally** the W-shaped angled profile (101) has a right angle in the area of the central crook edge (102), preferably also at the two trailing edges (103, 104).

3. The cable holder according to claim 1 or 2 **characterized in that** the snap-in projections (11, 12) delimiting the duct area (13) are L-shaped and spaced apart opposite each other so that the duct area (13) has a closed and/or U-shaped duct cross-section, **and/or**
that the snap-in projections (11, 12) are arranged in the longitudinal extension of the duct area (13) so that they preferably interlock without contact, in a comblike fashion, so that the end (110, 120) of at least one snap-in projection (11, 12) is arranged and/or extends between two opposite snap-in projections (11, 12), and/or
that the snap-in projections (11, 12) are formed elastically bendable and resilient so that they are pivotable with respect to the base body (10) of the cable holder element (1) and return to their initial position after pivoting.

4. The cable holder according to any one of the preceding claims **characterized in that** the snap-in projections (11, 12) are bent, in particular with the shape of an angled hook, and have two snap-in projection sections (113, 114, 123, 124), wherein the first snap-in projection section (113, 123) protrudes at an angle of 70-90°, preferably 85-90°, in particular exactly perpendicularly, and wherein the second snap-in projection section (114, 124) is a continuation of the first snap-in projection section (113, 123) at the end distant from the respective area (111, 121) and protrudes at an angle between 70° to 110°, preferalby 90°, to the first snap-in projection section (113, 123) in the direction of the snap-in projections (11, 12) protruding from the respective opposite area (111, 121), **and/or**
that the two snap-in projection sections (113, 114, 123, 124) are formed integrally, in particular of a flat body and/or a profile rod respectively, which has an arch (115, 125) between the first and the second snap-in projection sections (113, 114, 123, 124).

5. The cable holder according to any one of the preceding claims **characterized in that** the two snap-in projection sections (113, 114, 123, 124) enclose an angle of less than or equal to 90°, **and/or**
that the two areas (111, 121) from which the snap-in projections (11, 12) protrude extend in parallel and/or lie in one plane, **and/or**
that the respective number of snap-in projections (11, 12) projecting from the two areas (111, 121) differs by one at the most, **and/or**
that the ends of the snap-in projections (11, 12) or the ends of the second snap-in projection sections (123, 124) are tilted towards the base body (10).

6. The cable holder according to any one of the preceding claims **characterized in that** the end of each snap-in projection (11, 12) is arranged between two snap-in projections (11, 12) of the respective opposite area (111, 121), another snap-in projection (15, 16) protruding from the opposite area (111, 121) is provided, the end (150, 160) of which is approximated to and opposite of the end of the respective snap-in projection (11, 12), wherein in particular the front sides of the ends (110, 120, 150, 160) of the further snap-in projection (15, 16) and of the snap-in projection (11, 12) are opposite of each other.

7. The cable holder according to claim 5 **characterized in that** the further snap-in projections (15, 16) each have a first snap-in projection section (151, 161), which protrudes from the base body (10) at an angle, in particular at an angle of 70° to 110°, preferably 90°, and a second snap-in projection section (152, 162), which is a continuation of the first snap-in projection section (151, 152) and protrudes from the first snap-in projection section (151, 152),
**in that in particular** the shape and/or orientation of the first and/or second snap-in projection sections (151, 152, 161, 162) of the further snap-in projections (15, 16) correspond to the shape and orientation of the first and/or second snap-in projection sections (113, 114, 123, 124) of the snap-in projections (11, 12), and
**in that in particular** the length of the first snap-in projection sections (151, 161) of the further snap-in projections (15, 16) corresponds to the length of the first snap-in projection sections (113, 123) of the snap-in projections (11, 12).

8. The cable holder according to any one of the preceding claims **characterized in that** the snap-in projections (11, 12) protruding from the first area (111) and/or the second area (121) are formed and/or oriented equally, and/or that all snap-in projections (11, 12) are formed equally, **and/or**
that the further snap-in projections (15, 16) protruding from the first area (111) and/or the second area (121) are formed and/or oriented equally, and or that all further snap-in projections (15, 16) are formed equally.

9. The cable holder according to any one of the preceding claims **characterized in that** the snap-in projections (11, 12) protrude from two areas (111, 121), wherein a number of first snap-in projections (11) protrude from the first of the two areas (111) and a number of second snap-in projections (12) protrude from the second of the two areas (121), **and/or**
that the first snap-in projections (11) protrude from partial areas of the first area (111) lying on a first straight line (116), and/or that the second snap-in projections (12) protrude from partial areas of the second area (121) lying on a second straight line (126), wherein the first straight line (116) and the second straight line (126) are preferably arranged in parallel with each other, **and/or**
that a number of the further snap-in projections (15, 16) protrude from partial areas of the second areas (121) lying on the first straight line (116) and the rest of the other snap-in projections (16) protrudes from the second area (121) lying on the second straight line (126), **and/or**
that another snap-in projection (15, 16) is arranged between each two snap-in projections (11, 12), **and/or**
that the second snap-in projection sections (114, 124) of the snap-in projections (11, 12), and optionally also the second snap-in projection sections (152, 162) of the further snap-in projections (15, 16), lie in the same plane, **and/or**
that the base body (10) has at least one recess (105) in the areas opposite the snap-in projections (11, 12).

10. The cable holder according to any one of the preceding claims, **characterized in that** the base body (10) has at least one, in particular two, projections (17, 18) protruding therefrom, in particular perpendicularly and/or orthogonally, from which the individual snap-in projections (11, 12) and optionally the further snap-in projections (15, 16) protrude, **and/or**
that the duct cross-section of the duct area (13) tapers and/or expands in at least one partial area along the longitudinal extension of the duct area (13), **and/or**
that the snap-in projections (11, 12) are formed flexible and/or resilient, **and/or**
that the relation of the width in the longitudinal extension of the cable clams element (1) to the thickness of the snap-in projections (11, 12) lies in a range of 4:1 to 4:1.5, in particular 4:1.3.

11. The cable holder according to any one of the preceding claims **characterized in that** the snap-in projections (11, 12), and optionally the further snap-in projections (15,1 6), and/or the entire cable holder element (1) are made of plastic, in particular polyethylene PE and/or polypropylene PP.

12. The cable holder according to any one of the claims 2 to 11 **characterized in that** the base body (10) has fastening means (107) for fastening, **in particular** without tools, the cable holder (50) to a device, **in particular** to a mount (61) of a device (60), **and/or** that the common base body (100) has at least one recess (105) in the areas opposite the snap-in projections (11, 12).

13. The cable holder according to any one of the preceding claims **characterized in that** the first and second straight lines (116, 117) are arranged in parallel with each other.

14. An electronic device, in particular a betting and/or gambling device, having a cable holder (50) according to any one of the preceding claims.

## Revendications

1. Support de câbles comprenant un nombre d'éléments (1) de support de câbles pour loger un ou plusieurs câbles (2), comprenant un corps (10) de base ainsi qu'un nombre de saillies (11, 12) d'arrêt saillissant du corps (10) de base, qui saillissent à partir de zones (111, 121) opposées du corps de base, les saillies (11, 12) d'arrêt et éventuellement le corps de base (10) entourant, délimitant et/ou déterminant une zone (13) de canal pour guider les câbles (2), les saillies (11, 12) d'arrêt s'engrènent de préférence sans se toucher et/ou comme un peigne, de sorte que l'extrémité (110, 120) d'au moins une des saillies (11, 12) d'arrêt saillissant d'une zone (111, 121) est disposée et/ou saillit entre deux saillies (11, 12) d'arrêt saillissant de la zone (111, 121) respectivement opposée, **caractérisé en ce que**
les éléments (1) de support de câbles individuels sont disposés sur un corps (10) de base commun de façon uniforme, et **en ce que**
le corps (10) de base commun présente une forme plate et/ou plane et les saillies (12, 12) d'arrêt individuelles saillissent du corps (10) de base dans le même sens, et **en ce que**
les éléments (1) de support de câble sont orientés de manière uniforme sur le corps (10) de base et éventuellement les uns à côté des autres et/ou les uns derrière les autres.

2. Support de câbles comprenant un nombre d'éléments (1) de support de câbles pour loger un ou plusieurs câbles (2), comprenant un corps (10) de base ainsi qu'un nombre de saillies (11, 12) d'arrêt saillissant du corps (10) de base, qui saillissent à partir de zones (111, 121) opposées du corps de base, les saillies (11, 12) d'arrêt et éventuellement le corps de base (10) entourant, délimitant et/ou déterminant une zone (13) de canal pour guider les câbles (2), les saillies (11, 12) d'arrêt s'engrènent de préférence sans se toucher et/ou comme un peigne, de sorte que l'extrémité (110, 120) d'au moins une des saillies (11, 12) d'arrêt saillissant d'une zone (111, 121) est disposée et/ou saillit entre deux saillies (11, 12) d'arrêt saillissant de la zone (111, 121) respectivement opposée, **caractérisé en ce que**
le corps (10) de base commun forme un profil (101) angulaire en forme de W, le support de câbles comprenant deux éléments de support de câbles et les saillies (11, 12) d'arrêt des deux éléments (1) de support de câble saillissant du bord (102) avant central du profil (101) angulaire en forme de W et des saillies (11, 12) d'arrêt de chacun des éléments (1) de support de câbles saillissent des bords (103) terminaux du profil angulaire en forme de W, et
éventuellement des saillies (17, 18) saillissant du bord (102) avant et/ou du bord (103) terminal, desquels saillissent les saillies (11, 12) d'arrêt, et/ou éventuellement le profil (101) angulaire en forme de W comportant un angle droit dans la zone du bord (102) avant central, de préférence également dans les deux bords (103, 104) terminaux.

3. Support de câbles selon les revendications 1 ou 2, **caractérisé en ce que** les saillies (11, 12) d'arrêt délimitant la zone (13) de canal présentent une forme de L et sont espacées les unes des autres et opposées, de sorte que la zone (13) de canal présente une section de canal fermée et/ou en forme de U, et/ou **en ce que**
les saillies (11, 12) d'arrêt sont disposées dans le sens de la longueur de la zone (13) de canal de sorte qu'elles s'engrènent de préférence sans se toucher, comme un peigne, de sorte que l'extrémité (110, 120) d'au moins une des saillies (11, 12) d'arrêt est disposée et/ou saillit entre deux saillies (11, 12) d'arrêt respectivement opposées, et/ou en ce que
les saillies (11, 12) d'arrêt présentent une forme élastiquement flexible et à ressort, de sorte qu'elles peuvent être pivotées en face du corps (10) de base de l'élément (1) de support de câbles et, après avoir été pivotées, retourner dans leur position de départ.

4. Support de câbles selon une des revendications précédentes, **caractérisé en ce que** les saillies (11, 12) d'arrêt présentent en particulier une forme courbée de composteur et comportent deux parties (113, 114, 123, 124) de saillie d'arrêt, la première partie (113, 123) de saillie d'arrêt saillissant de la zone (111, 121) respective selon un angle de 70 ° à 90 °, de préférence de 85 ° à 90 °, en particulieexactement perpendiculaire et/ou normal, et la deuxième partie (114, 124) de saillie d'arrêt continuant la première partie à l'extrémité éloignée de la zone (111, 123) respective et saillissant vers la première partie (113, 123) de saillie d'arrêt, orientée dans le sens des saillies (11, 12) d'arrêt saillissant de la zone (111, 121) respectivement opposée, en particulier selon un angle compris entre 70° et 110°, de préférence 90°, et/ou **en ce que**
les deux parties (113, 114, 123, 124) de saillie d'arrêt forment une seule pièce, étant en particulier respectivement formées par un corps plat et/ou une barre profilée, qui entre la première et la deuxième partie (113, 114, 123, 124) de saillie d'arrêt présente un arc (115, 125).

5. Support de câbles selon une des revendications précédentes, **caractérisé en ce que** les deux parties (113, 114, 123, 124) de saillie d'arrêt comprennent un angle inférieur ou égal à 90 °, et/ou **en ce que**
les deux zones (111, 121) desquelles saillissent les saillies (11, 12) d'arrêt, sont disposées de manière parallèle et/ou dans le même plan, et/ou **en ce que**
le nombre respectif des saillies (11, 12) d'arrêt saillissant des deux zones (111, 121) change au maximum de un, et/ou **en ce que**
les extrémités des saillies (11, 12) d'arrêt ou les extrémités des deuxièmes parties (123, 124) de saillie d'arrêt sont penchées vers le corps (10) de base.

6. Support de câbles selon une des revendications précédentes, **caractérisé en ce que** pour chaque saillie (11, 12) d'arrêt, dont l'extrémité est disposé entre deux saillies (11, 12) d'arrêt saillissant de la zone (111, 121) respectivement opposée, est prévu une autre saillie (15, 16) d'arrêt saillissant de la zone (111, 121) opposée, dont l'extrémité (150, 160) est proche de et opposée à l'extrémité de la saillie (11, 12) d'arrêt respective, en particulier les faces avant des extrémités (110, 120, 150, 160) de l'autre saillie (15, 16) d'arrêt et de la saillie (11, 12) d'arrêt étant opposées.

7. Support de câbles selon la revendication 5, **caractérisé en ce que** les deux autres saillies (15, 16) d'arrêt présentent chacune une première partie (151, 161) de saillie d'arrêt, qui saillit du corps de base (10) selon un angle, en particulier un angle compris entre 70 ° et 110 °, de préférence de 90 °, et une deuxième partie (152, 162) de saillie d'arrêt, qui continue la première partie (151, 152) de saillie d'arrêt et saillit de la première partie (151, 152) de saillie d'arrêt, **en ce que**
en particulier la forme et/ou l'orientation de la première et/ou de la deuxième partie (151, 152, 161, 162) de saillie d'arrêt des autres saillies (15, 16) d'arrêt correspondent à la forme et l'orientation de la première et/ou de la deuxième partie (113, 114, 124, 124) de saillie d'arrêt des saillies (11, 12) d'arrêt, et **en ce que**
en particulier la longueur de la première partie (151, 161) des autres saillies (15, 16) d'arrêt correspond à la longueur de la première partie (113, 123) des saillies (11, 12) d'arrêt.

8. Support de câbles selon une des revendications précédentes, **caractérisé en ce que** les saillies (11, 12) d'arrêt saillissant de la première zone (111) et/ou de la deuxième zone (121) sont formées ou orientées de façon uniforme, et/ou **en ce que** toutes les saillies (11, 12) sont formées ou orientées de façon uniforme, et/ou **en ce que** les autres saillies (15, 16) d'arrêt saillissant de de la première zone (111) et/ou de la deuxième zone (121) sont formées ou orientées de façon uniforme, et/ou **en ce que** toutes les autres saillies (15, 16) sont formées de façon uniforme.

9. Support de câbles selon une des revendications précédentes, **caractérisé en ce que** les saillies (11, 12) d'arrêt saillissent de deux zones (111, 121), un nombre de premières saillies (11) d'arrêt saillissant de la première des deux zones (22) et un nombre de deuxièmes saillies (12) d'arrêt saillissant de la deuxième des deux zones (121), et/ou en ce que
les premières saillies (11) d'arrêt saillissent de zones partielles de la première zone (111), qui sont disposées sur une première droite (116) et/ou **en ce que** les deuxièmes saillies (12) d'arrêt saillissent de zones partielles de la deuxième zone (121), qui sont disposés sur une deuxième droite (126), la première droite (116) et la deuxième droite (126) étant de préférence disposées parallèlement, et/ou **en ce que**
un nombre des autres saillies (15, 16) d'arrêt saillissant de zones partielles de la deuxième zone (121), qui sont disposées sur la première droite (116) et/ou **en ce que** les saillies (16) d'arrêt restantes saillissent de zones partielles de la deuxième zone (121), qui sont disposés sur la deuxième droite (126), et/ou **en ce que**
entre respectivement deux saillies (11, 12) d'arrêt est disposé une autre saillie (15, 16) d'arrêt, et/ou **en ce que**
les deux parties (114, 124) de saillie d'arrêt des saillies (11, 12) d'arrêt, éventuellement également les deux parties (152, 162) de saillie d'arrêt des autres saillies (15, 16) d'arrêt, sont disposées dans le même plan, et/ou **en ce que**
le corps (10) de base présente au moins un évidement (105)dans les zones opposées aux saillies (11, 12) d'arrêt.

10. Support de câbles selon une des revendications précédentes, **caractérisé en ce que** le corps (10) de base comporte au moins un, en particulier deux saillies (17, 18) saillissant de celui-ci en particulier de façon perpendiculaire ou/normale, desquelles saillissent les saillies (11, 12) d'arrêt individuelles et éventuellement les autres saillies (15, 16) d'arrêt, et/ou **en ce que**
la section de canal de la zone (13) de canal diminue et/ou augmente au moins dans une zone partielle le long de la longueur de la zone (13) de canal, et/ou **en ce que**
les saillies (11, 12) d'arrêt présentent une forme élastiquement flexible et à ressort, et/ou **en ce que**
la relation de la largeur dans le sens de la longueur de l'élément (1) de support de câbles à l'épaisseur des saillies (11, 12) d'arrêt est comprise entre 4 :1 et 4 :1,5, étant en particulier de 4 :1,3.

11. Support de câbles selon une des revendications précédentes, **caractérisé en ce que** les saillies (11, 12) d'arrêt, éventuellement les autres saillies (15, 16) d'arrêt et/ou l'élément (1) de support de câbles entier est produit en polyéthylène PE et/ou en polypropylène PP.

12. Support de câbles selon une des revendications 2 à 11, **caractérisé en ce que** le corps (10) de base comprend des moyens (107) d'attachement pour attacher, en particulier de sorte qu'il peut être être détaché sans outils, le support (50) de câbles sur un dispositif, en particulier avec une structure (61) d'un dispositif (60), et/ou **en ce que** le corps (100) de base commun comprend au moins un évidement (105) dans les zones opposées aux saillies (11, 12) d'arrêt.

13. Support de câbles selon une des revendications précédentes, **caractérisé en ce que** les droites (116, 117) première et deuxième sont disposées parallèlement.

14. Dispositif électronique, en particulier un dispositif de pari ou de jeu de hasard, avec un support (50) de câbles selon une des revendications précédentes.
